# EUROPÄISCHE PATENTSCHRIFT

(11) **EP 4 114 801 B1**
(45) Veröffentlichungstag und Bekanntmachung des Hinweises auf die Patenterteilung: **03.12.2025**
(21) Anmeldenummer: 21708612.3
(22) Anmeldetag: 25.02.2021
(51) Int. Cl.: C02F 1/46, C02F 1/461, C02F 1/48

(54) **VORRICHTUNG UND VERFAHREN ZUM BEHANDELN EINES WASSERSTROMS**
DEVICE AND METHOD FOR TREATING A WATER STREAM
DISPOSITIF ET PROCEDE DE TRAITEMENT D'UN FLUX D'EAU

(30) Priorität: 06.03.2020 CH 2672020; 29.09.2020 CH 12332020
(43) Veröffentlichungstag der Anmeldung: 11.01.2023
(73) Patentinhaber: Fabio and Markus colloid engineering GmbH, 8807 Freienbach (CH)
(72) Erfinder: HÜTHER, Fabio, 8272 Ermatingen (CH)
(74) Vertreter: Frei Patent Attorneys
(86) Internationale Anmeldenummer: PCT/EP2021/054680
(87) Internationale Veröffentlichungsnummer: WO 2021/175694

(56) Entgegenhaltungen:
- DE-A1- 10 009 643
- DE-A1- 19 519 715
- US-A1- 2004 251 211
- US-A1- 2009 229 981
- US-B1- 6 350 385
- US-B2- 7 374 655

## Beschreibung

Die Erfindung betrifft das technische Gebiet der Wasserbehandlung. Gegenstand der Erfindung ist eine Vorrichtung und ein Verfahren zum Behandeln eines Wasserstroms gemäss den Oberbegriffen der Patentansprüche 1 und 9.

Bei der Gewinnung von Trinkwasser muss sichergestellt werden, dass dieses keine krankheitserregenden Keime enthält, und dass der Salzgehalt kleiner ist als 0.1%.

Zur Aufbereitung von Wasser können entsprechend der jeweiligen Anforderungen verschiedene Verfahren eingesetzt werden. Beispiele solcher Verfahren sind
a) Filtration, insbesondere Mikro-, Ultra- und Nanofiltration. Durch Filtration können Partikel aus dem Wasser entfernt werden, die grösser sind als die Porengrösse der jeweiligen Filter. Bei der Gewinnung von Trinkwasser können durch Ultrafiltration auch pathogene Keime abgeschieden werden.
b) Umkehrosmose zur Entfernung von Salzen.
c) Desinfektion, insbesondere durch Zugabe von Chlor, Chlordioxid, Natriumhyperchlorit oder Ozon oder durch UV-Bestrahlung zur Verminderung von infektiösen Keimen.

Bei der sogenannten Dead-End-Filtration wird der zu reinigende Wasserstrom (Feed) unter Druck gegen eine Filtermembran bzw. Membran gepresst. Dabei werden Partikel, die grösser sind als die Poren der Membran, von der Membran als Retenat zurückgehalten. Auf der anderen Seite der Membran fliesst das gereinigte Wasser bzw. allgemein das Permeat ab. Das Retenat sammelt sich zuflussseitig an. Deshalb müssen Filter in regelmässigen Intervallen ausgetauscht oder gereinigt werden. Ein dauerhafter kontinuierlicher Betrieb solcher Systeme ist nicht möglich.

Bei der Tangentialflussfiltration, auch Querstrom- oder Cross-Flow-Filtration genannt, fliesst der zu reinigende Wasserstrom (Feed) unter Druck tangential entlang der einen Oberfläche der Membran. An der gegenüberliegenden anderen Oberfläche der Membran tritt ein Teil des Wasserstroms als gereinigtes Permeat aus. Der restliche Teil des zugeführten Wasserstroms wird als Retenat mit einer höheren Partikelkonzentration abgeleitet. Eine Filtration nach dem Tangentialflussprinzip kann kontinuierlich erfolgen, da die zurückgehaltenen Partikel laufend mit dem Retenatstrom abgeführt werden. Der Wirkungsgrad dieses Verfahrens ist jedoch eingeschränkt, da ein nicht vernachlässigbarer Anteil des zugeführten Wasserstroms (Feed) als Retenat wieder abgeführt wird und somit nicht als gereinigtes Permeat genutzt werden kann. Zur Verhinderung einer Wiederverkeimung von Trinkwasser in Verteilnetzen kann diesem Trinkwasser z.B. mit geeigneten Chlorierungsverfahren Chlor zugesetzt werden. Die chemische Kontaminierung des Wassers durch Chlor darf nur innerhalb zugelassener Grenzwerte erfolgen. Chloriertes Wasser ist geruchlich und geschmacklich nicht neutral.

Aus der EP0114364A1 ist ein System zum Sterilisieren von Wasser bekannt. Dabei fliesst gefiltertes Wasser durch einen Durchflussmesser und durch eine Oxidationskammer mit Elektroden. Hier werden jeweils abhängig von der Zusammensetzung bzw. den Verunreinigungen im Wasser aktiver Sauerstoff, Chlor und/oder andere oxidierende Stoffe erzeugt. Anschliessend fliesst das Wasser durch eine Kammer mit Silberelektroden. Eine elektronische Steuerung regelt den elektrolytischen Strom zwischen den Elektroden in Abhängigkeit des Wasserstroms so, dass direkt proportional zum Wasserstrom Silberionen erzeugt werden. In einer weiteren Kammer mit Silber-aktiviertem Kohlenstoff werden anschliessend Mikroben in einem oligodynamischen Prozess zerstört und zusammen mit überschüssigen Silberpartikeln herausgefiltert.

Das in EP0114364A1 beschriebene System ist vergleichsweise komplex. Mikroben und Silberpartikel werden in der Filterkammer mit Aktivkohle zurückgehalten. Der oligodynamische Prozess, also das Zerstören der Mikroben, findet im Wesentlichen in der Filterkammer statt. Die Aktivkohle bzw. das Filter der Filterkammer muss regelmässig ersetzt oder regeneriert werden. Wenn das gereinigte Wasser in ein Verteilnetz eingespeist wird, muss sichergestellt sein, dass dort keine erneute Verunreinigung stattfinden kann. Weitere Vorrichtungen zur Behandlung von Wasser sind in DE 100 09 643 A1 und US 7 374 655 B2 offenbart.

Eine Aufgabe der vorliegenden Erfindung ist es, eine Vorrichtung und ein Verfahren zur verbesserten Aufbereitung von Trinkwasser bereitzustellen.

Diese Aufgabe wird gelöst durch eine Vorrichtung und durch ein Verfahren zum Behandeln eines Wasserstroms gemäss den Merkmalen der Patentansprüche 1 und 9.

Die Vorrichtung umfasst eine Kammer mit einer Einlassöffnung und mit einer Auslassöffnung, die mit einem zuführenden bzw. einem abführenden Rohrabschnitt einer Wasserleitung verbindbar sind. In der Wasserleitung strömendes Wasser strömt durch die Einlassöffnung in die Kammer ein, deren Wandung einen Strömungskanal definiert, und durch die Auslassöffnung wieder aus. Die Kammer umfasst mindestens eine Elektrolyseeinrichtung mit zwei beabstandeten Elektroden und eine Verwirbelungseinrichtung.

Jede Elektrolyseeinrichtung ist dazu bestimmt, elektrochemisch Partikel des Elektrodenmaterials an das durch die Kammer strömende Wasser abzugeben. Die Elektroden sind in direktem Kontakt mit dem durch die Kammer strömenden Wasser.

Die Elektroden jeder Elektrolyseeinrichtung können aus dem gleichen oder aus unterschiedlichen Materialien gefertigt sein, beispielsweise aus Metallen wie Silber oder Kupfer oder aus Legierungen mit diesen Metallen. Die Elektroden können z.B. als beabstandet zueinander angeordnete Platten ausgebildet sein, wobei der Zwischenraum zwischen den Platten einen Strömungsraum für den Wasserstrom begrenzt. Bei Anordnungen mit mehreren Elektrolyseeinrichtungen können diese Elektrolyseeinrichtungen in Strömungsrichtung des Wassers nacheinander und/oder nebeneinander angeordnet sein. Bei einer möglichen Konfiguration sind zwei Elektrolyseeinrichtungen nacheinander angeordnet, wobei eine dieser Elektrolyseeinrichtungen zwei Elektroden aus Kupfer oder einer Kupferlegierung umfasst, und die andere Elektrolyseeinrichtung Elektroden aus Silber oder einer Silberlegierung. Module mit gleichen oder unterschiedlichen Elektroden können entsprechend den jeweiligen Anforderungen an einem Einsatzort einfach miteinander kombiniert werden.

Bei einer weiteren möglichen Konfiguration können z.B. Elektrodenplatten zweier Elektrolyseeinrichtungen parallel nebeneinander angeordnet sein. Insbesondere können diese Elektrolyseeinrichtungen eine gemeinsame mittlere Platte umfassen, deren Masse bzw. Dicke vorzugsweise grösser ist als jene der beiden äusseren Platten. Die Elektroden können alle aus dem gleichen Material oder aus unterschiedlichen Materialien gefertigt sein. Anordnungen mit mehreren parallel nebeneinander angeordneten Platten beanspruchen wenig Platz und sind besonders effizient. Die wirksame Elektrodenfläche ist bezogen auf das beanspruchte Volumen gross. Wegen des vergleichsweise kleinen Abstandes der Elektroden ist ein Betrieb mit kleineren Spannungen möglich.

Aufgrund der starken antimikrobiellen Wirkung werden zum Abtöten von Keimen bevorzugt Silber und/oder Kupfer als Elektrodenmaterial verwendet. Silber hat ein besonders hohes antimikrobielles Wirkspektrum. Kleinste Silberpartikel, auch Nanosilber genannt, kann Zellwände und Zellmembranen durchdringen und im Inneren von Zellen wirken. Kleinste Silberpartikel können sich auch an Viren anheften und deren Bindung an Wirtszellen unterdrücken. Zusätzlich oder alternativ können Elektroden auch aus anderen Metallen gefertigt sein, z.B. aus Zinn, Eisen Bismut oder Gold. Eine oligodynamische Wirkung haben auch Blei und Quecksilber. Unter Berücksichtigung verschiedener Faktoren wie Toxizität, Wirksamkeit, Verfügbarkeit und Kosten sind z.B. bei der Aufbereitung von Trinkwasser vor allem Silber, aber auch Kupfer bevorzugte Elektrodenmaterialien.

Alternativ oder zusätzlich können Elektroden aus anderen Materialien dazu verwendet werden, den Wasserstrom mit anderen Stoffen anzureichern, z.B. mit Spurenelementen wie Calcium und/oder Magnesium zu mineralisieren. Bei unterschiedlichen Anwendungen wie z.B. Entsalzungsanlagen, Wasseraufbereitungsanlagen in Schwimm- oder Heilbädern und Anlagen zur Aufbereitung von Trinkwasser oder von Wasser für landwirtschaftliche Anwendungen kann so die jeweils gewünschte Wasserqualität bereitgestellt werden.

Bei jeder Elektrolyseeinrichtung wird eine von einer zugehörigen Spannungsquelle bereitgestellte elektrische Spannung an das Elektrodenpaar angelegt. Dadurch wird im Wasser ein elektrolytischer Strom zwischen den jeweiligen Elektroden erzeugt. Dabei werden unter anderem an der Anode positiv geladene Kationen sowie positiv geladene und/oder neutrale Partikel des Elektrodenmaterials an das Wasser abgegeben. Die positiv geladenen Ionen und Partikel im Wasser werden durch Coulombkraft von der negativ geladenen Kathode angezogen. Der Geschwindigkeitsanteil in Richtung der Kathode ist abhängig von der Spannung zwischen den Elektroden und von der Art der geladenen Teilchen. Geladene und neutrale Partikel werden zudem vom Wasserstrom mitgerissen.

Vorzugsweise stellt die Spannungsquelle eine Spannung mit wechselnder Polarität bereit, z.B. eine Wechselspannung von weniger als 50VAC mit einer Frequenz im Bereich von etwa 50 bis 60Hz. Durch die wechselnde Polarität wirkt jede der Elektroden alternierend als Anode und als Kathode. Dadurch werden Ablagerungen an den Elektroden durch Reduktion oder Oxidation verhindert bzw. minimiert.

Zumindest bei einem Teil der von einer Elektrode abgegebenen Ionen oder geladenen Partikel wird die Ladung aufgrund der alternierenden Polarität der Elektroden wieder neutralisiert. Eine erneute Anlagerung dieser Teile an der Elektrode wird zusätzlich durch den Wasserstrom verhindert oder zumindest erschwert.

Verschiedene Parameter wirken sich aus auf die Abgabe von Partikeln und Ionen von der jeweiligen Anode an den Wasserstrom. Durch geeignete Wahl und/oder Änderungen von Werten solcher Parameter können Eigenschaften wie z.B. Art und Menge der pro Zeiteinheit abgelösten Ionen und Partikel beeinflusst werden.

Die Polarität der an die Elektroden angelegten Spannung bestimmt jeweils die Richtung des Elektrolysestroms. Eine höhere Spannung zwischen den Elektroden und/oder ein kleinerer Abstand der Elektroden bewirken einen höheren Elektrolysestrom. Die Wellenform bzw. allgemein die zeitliche Änderung der Elektrodenspannung wirkt sich ebenfalls auf die Ablösung von Ionen und Partikeln von den Elektroden aus. Insbesondere können durch Vorgabe einer Spannungsfunktion, d.h. einer Elektrodenspannung in Abhängigkeit der Zeit, die mittlere Grösse bzw. das Grössenspektrum und/oder die Ladungen von abgelösten Partikeln beeinflusst werden. So werden z.B. bei Silber- oder Kupferelektroden durch das Anlegen einer Spannung nicht nur einzelne Silberkationen (Ag+) bzw. Kupferkationen (Cu++) an das als Wasser abgegeben. Abhängig von den jeweils wirkenden Kräften werden auch elektrisch neutrale und/oder geladene Nanopartikel mit mehreren Silber- bzw. Kupferatomen oder Verbindungen mit Silber- bzw. Kupferatomen aus der jeweils als Anode wirkenden Elektrode herausgerissen. Typischerweise liegt die Grösse solcher Partikel in der Grössenordnung von etwa 1nm bis etwa 100nm. Die Anzahl Atome solcher Teilchen liegt in der Grössenordnung von etwa 1000 bis etwa 10E9. Flüssige Dispersionen mit solchen Partikeln werden auch als kolloidales Silber bzw. Kupfer bezeichnet.

Die Frequenz des Polaritätswechsels der Elektrodenspannung sowie die Grösse und die Ladung von abgegebenen Partikeln wirken sich aus auf die durchschnittliche Länge des Weges, den diese Partikel quer zum Wasserstrom in Richtung der komplementär geladenen Elektrode zurücklegen.

Geometrische Parameter wie Grössen und Abstand von wirksamen Elektrodenoberflächen, die mit dem Wasser in Kontakt sind, sowie der von diesen Elektrodenflächen begrenzte freie Strömungsquerschnitt wirken sich ebenfalls aus auf die Abgabe von Ionen und Partikeln an den Wasserstrom. Bei plattenförmigen Elektroden können **z.B.** durch einen kleineren Plattenabstand die elektrische Feldstärke zwischen den Platten erhöht und bei sonst gleichbleibenden Dimensionen der Strömungsquerschnitt für das Wasser verringert werden. Auf geladene Partikel, die an den Wasserstrom abgegeben worden sind, bewirken das grössere elektrische Feld eine grössere Kraft in Richtung der jeweils komplementären Elektrode, und die grössere Strömungsgeschwindigkeit des Wassers eine grössere Kraft in Strömungsrichtung des Wassers.

Bei vorgegebenem Elektrodenabstand kann der von geladenen Partikeln in Richtung der komplementär geladenen Elektrode zurückgelegte Weg verringert werden, indem die Frequenz des Polaritätswechsels erhöht und/oder die Elektrodenspannung verringert werden. Nach dem Polaritätswechsel wandern geladene Partikel zurück in Richtung der Elektrode, von der sie an das Wasser abgegeben worden sind. Bei jenen Partikeln, die wieder ausreichend nahe an diese Elektrode gelangen, wird die Ladung wieder an die Elektrode abgegeben. Da die Partikel vom Wasserstrom weiter mitgerissen werden, können sie sich nicht mehr an der Elektrode anlagern.

Angrenzend an die Elektroden umfasst der Wasserstrom nun kolloidales Silber oder Kupfer. Alternativ oder zusätzlich könnten auch andere Materialien elektrochemisch an den Wasserstrom abgegeben werden.

Die Verwirbelungseinrichtung umfasst eine oder mehrere Düsen, die den Wasserstrom beeinflussen und dabei insbesondere eine Durchmischung der Kolloide im Wasserstrom bewirken. Vorzugsweise umfasst jede Düse mindestens einen Eintrittskanal, der quer zur Hauptströmungsrichtung vorzugsweise tangential in einen Wirbelraum mündet. Durch Engstellen im Bereich der Eintrittskanäle kann die Strömungsgeschwindigkeit des Wasserstroms lokal erhöht werden. Der Wirbelraum hat vorzugsweise einen rotationssymmetrischen Querschnitt. Wenn der Wasserstrom mit grosser Strömungsgeschwindigkeit durch die Eintrittskanäle tangential in den Wirbelraum eingeleitet wird, bilden sich durch Verwirbelungen turbulente Strömungen. Dabei werden in der Regel Drehzahlen von über 1000 min⁻¹ bis über 100000 min⁻¹ erreicht. Dies bewirkt eine Entgasung des Wassers. Aufgrund der beim Verwirbeln wirkenden Kräfte und Druckverhältnisse kann insbesondere gelöstes und als Kohlensäure gebundenes Kohlendioxid CO₂ als Gas ausgeleitet werden. Durch das Verwirbeln des Wassers kann direkt und/oder indirekt aufgrund des veränderten Kohlensäuregehalts die Struktur von gelösten Calciumverbindungen verändert werden. Dieser Effekt kann auch ohne Elektrolyseeinrichtungen dazu genutzt werden, Kalkablagerungen zu verhindern, zu erschweren oder sogar nach und nach aufzulösen.

Beim Verwirbeln des Wassers erhöht sich im Weiteren die Wahrscheinlichkeit von Wechselwirkungen von Partikeln im Wasserstrom. Insbesondere können grössere Partikel z.B. bei Kollisionen in kleinere Partikel zerlegt werden.

Vorzugsweise sind z.B. im Bereich jeder Düse ein oder mehrere Permanentmagnete so angeordnet, dass der Wasserstrom beim oder nach dem Passieren der Düsen das resultierende Magnetfeld dieser Magnete durchquert. Geladene Partikel und Ionen werden beim Durchqueren des Magnetfelds aufgrund der wirkenden Lorenzkräfte zusätzlich in unterschiedliche Richtungen abgelenkt bzw. beschleunigt. Bei polaren Teilchen bewirkt das Magnetfeld Drehmomente, und bei elektrisch leitenden Partikeln wird eine Spannung induziert, die beim Bewegen dieser Partikel durch das Magnetfeld wiederum ein auf die Partikel wirkendes Drehmoment zur Folge hat.

Aufgrund der Wechselwirkung des Magnetfeldes mit geladenen, polaren und elektrisch leitenden Partikeln wird die kinetische Geschwindigkeits- und Energieverteilung dieser Partikel beeinflusst. Grössere Partikel werden z.B. durch Kollisionen in kleinere Partikel zerlegt. Durch das Zerlegen grösserer Silber- und Kupferpartikel in kleinere Partikel wird die Anzahl dieser Partikel erhöht. Da kleinere Partikel ebenfalls eine antimikrobielle Wirkung haben, wird durch die Konzentrationserhöhung der kolloiden Teilchen bei gleicher Masse deren Effektivität erhöht.

Das Verwirbeln des Wassers und dessen Beeinflussung durch das Magnetfeld wirken sich auch aus auf Stoffe wie z.B. Calcium- und Magnesiumcarbonat bzw. allgemein chemische Verbindungen, die sich zu Kristallstrukturen gruppieren können, insbesondere Salze mit ionischen Bindungen. Die Ausbildung von Kristallkeimen und Kristallen wird z.B. durch Molekülschwingungen oder aufgrund der Impulse und Drehimpulse bzw. der Bewegung von Teilchen verhindert oder zumindest erschwert. Kristallkeime, die bereits eine gewisse Grösse aufweisen, können z.B. durch Kollisionen mit anderen Teilchen, insbesondere durch Kollisionen mit kolloidalen Partikeln, in kleinere Teilchen zerlegt werden. Dieser Effekt ist vorteilhaft bei der Bereitstellung von Trinkwasser und bei der Bereitstellung von Wasser in der Landwirtschaft.

Anhand einiger Figuren wird die Erfindung im Folgenden näher beschrieben. Dabei zeigen
- Figur 1: einen Längsschnitt einer Vorrichtung zur Behandlung eines Wasserstroms,
- Figur 2: einen Querschnitt eines Kammerabschnitts mit einer Elektrodenanordnung,
- Figur 3: eine Seitenansicht der Elektrodenanordnung aus Figur 2,
- Figur 4: vier verschiedene Spannungsfunktionen zur Ansteuerung der Elektroden,
- Figur 5: eine vergrösserte Seitenansicht der Verwirbelungseinrichtung aus Figur 1,
- Figur 6: eine Düse der Verwirbelungseinrichtung in Seitenansicht,
- Figur 7: eine ausströmseitige Axialansicht der Düse aus Figur 6,
- Figur 8: einen Längsschnitt einer weiteren Vorrichtung zur Behandlung eines Wasserstroms,
- Figur 9: einen ersten Kammerabschnitt der Vorrichtung aus Figur 8,
- Figur 10: einen Halter mit Elektroden der Vorrichtung aus Figur 8,
- Figur 11: einen Adapter mit Sensorelementen.

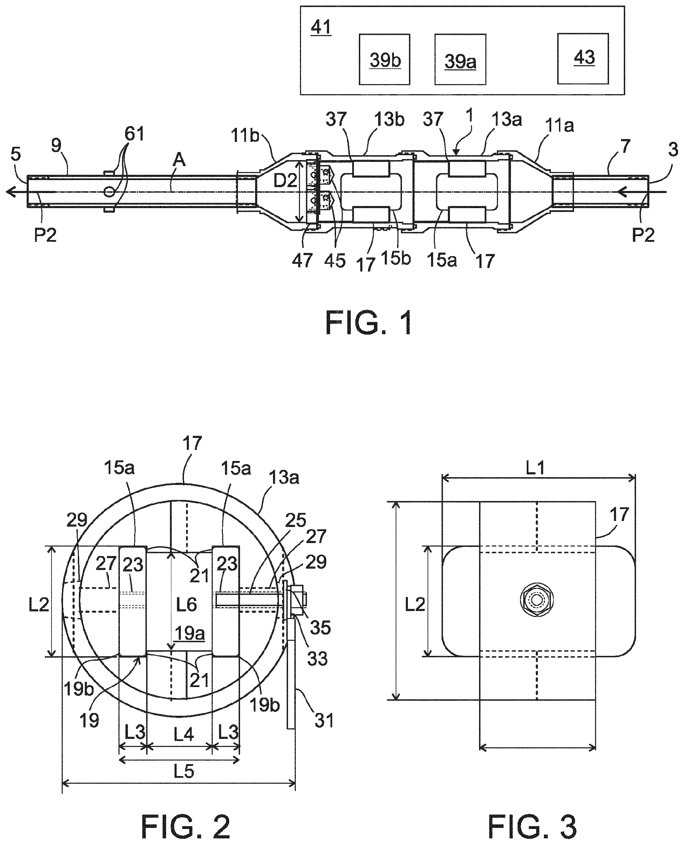

Figur 1 zeigt einen Längsschnitt einer beispielhaften Ausführungsform einer Vorrichtung zum Behandeln eines Wasserstroms. Die Vorrichtung umfasst eine Kammer 1 mit einer Einlassöffnung 3 und einer Auslassöffnung 5, die mit einem zuführenden bzw. einem abführenden Rohrabschnitt einer Wasserleitung verbindbar sind. Vorzugsweise ist die Kammer 1 aus mehreren Abschnitten zusammengesetzt, die in geeigneter Weise, z.B. mittels Fittingen und/oder Innen- und Aussengewinden dicht und druckbeständig miteinander verbunden sind. Verbindungsstellen zwischen benachbarten Abschnitten können bei Bedarf zusätzliche Dichtmittel wie z.B. O-Ringe umfassen. Die einzelnen Abschnitte der Kammerwandung können insbesondere im Wesentlichen rotationssymmetrisch mit zylindrischen und/oder konischen Bereichen ausgebildet und koaxial entlang einer gemeinsamen Kammerachse A angeordnet sein. Durch diesen modularen Aufbau können unterschiedliche Kammern 1 einfach entsprechend der jeweiligen Bedürfnisse zusammengesetzt werden. Die Wandungen der Kammerabschnitte begrenzen einen Strömungsraum bzw. einen Strömungskanal für das Wasser. Vorzugsweise sind die Einlassöffnung 3 am Ende eines Einlassrohrs 7 und die Auslassöffnung 5 am Ende eines Auslassrohrs 9 ausgebildet, die durch geeignete bekannte Verbindungstechniken mit dem jeweiligen Rohrabschnitt der Wasserleitung verbindbar sind. Die Hauptströmungsrichtung des Wassers ist durch die Pfeile P1 dargestellt.

Die Kammer 1 umfasst anschliessend an das Einlassrohr 7 vorzugsweise einen ersten Adapter 11a, der z.B. einen konischen Abschnitt zum Erweitern bzw. Vergrössern oder allgemein zum Anpassen der Fläche des Strömungsquerschnitts umfassen kann. An beiden Enden umfasst der Adapter 11a vorzugsweise je ein Innengewinde als Verbindungsmittel zum Verbinden mit korrespondierenden Verbindungsmitteln am Einlassrohr 7 und an einem angrenzenden Kammerabschnitt 13a. In analoger Weise sind ein weiterer Kammerabschnitt 13b, ein weiterer Adapter 11b und das Auslassrohr 9 miteinander verbunden.

Im ersten Kammerabschnitt 13a sind zwei Elektroden 15a einer ersten Elektrolyseeinrichtung angeordnet. Diese sind aus einem ersten Material gefertigt, z.B. aus Feinsilber oder Feinkupfer. Die Elektroden 15a sind vorzugsweise Körper mit zumindest näherungsweise ebenen Kontaktflächen wie z.B. Platten oder Barren. Die Elektroden 15a sind im Kammerabschnitt 13a beabstandet zueinander so gehalten, dass sie einen Abschnitt des Strömungskanals begrenzen.

Figur 2 zeigt einen Querschnitt des Kammerabschnitts 13a mit der Elektrodenanordnung, Figur 3 eine vergrösserte Detailansicht der Elektrodenanordnung. Bei Vorrichtungen, die für den Einbau bei 3/4-Zoll-Wasserleitungen bestimmt sind, können die näherungsweise quaderförmigen Elektroden 15a z.B. eine Länge L1 = 49.7mm, eine Breite L2 = 28.5mm und eine Höhe L3 = 7mm haben. Die beiden Elektroden 15a sind bei dieser Ausführungsform in einem Abstand L4 von etwa 17mm zueinander in einem ringförmigen Halter 17 befestigt. Der Halter 17 ist aus einem lebensmittelverträglichen Material, beispielsweise aus einem Polyamid gefertigt. Er kann einstückig oder alternativ mehrteilig, beispielsweise aus zwei Ringhälften zusammengesetzt sein. Bei mehrteiligen Ausführungsformen können die Teile durch geeignete Fügetechniken wie z.B. Ultraschallschweissen oder mittels Rastelementen miteinander verbunden sein. Der Halter 17 umfasst eine zentrale axiale Ausnehmung 19 mit einem mittleren Abschnitt 19a mit rechteckigem Querschnitt und zwei daran angrenzenden äusseren rechteckigen Abschnitten 19b. Die Gesamtlänge L5 dieser Abschnitte 19a, 19b entspricht der Summe der beiden Elektrodenhöhen L3 und des gegenseitigen Abstandes L4 der beiden Elektroden 15a. Die Länge und die Breite jedes der äusseren Abschnitte 19b entsprechen im Wesentlichen der Breite L2 und der Höhe L3 der Elektroden 15a.

Optional kann zwischen den Elektroden 15a und den angrenzenden Flächen des Halters 17 zusätzlich eine Dichtplatte oder ein elastisches Dichtelement angeordnet sein (nicht dargestellt). Gegebenenfalls erhöht sich dadurch die Gesamtlänge L5 der zentralen Ausnehmung 19.

Im Bereich der äusseren Abschnitte 19b entspricht die Breite der Ausnehmung 19 der Breite L2 der Elektroden 15a. Im mittleren Abschnitt 19a hat die Ausnehmung 19 vorzugsweise eine geringfügig kleinere Breite L6. Durch Absätze 21 an den Grenzen der äusseren Abschnitte 19b zum mittleren Abschnitt 19a der Ausnehmung 19 können in den äusseren Abschnitten 19b gelagerte Elektroden 15a im Abstand L4 parallel zueinander gehalten werden.

Jede Elektrode 15a umfasst eine Gewindebohrung 23. Diese ist vorzugsweise in einem Sackloch angeordnet, das nur von einer der beiden Hauptseiten her zugänglich ist. Alternativ kann die Gewindebohrung 23 auch durchgehend ausgebildet sein.

Mittels zweier Schrauben 25 oder Gewindebolzen, die durch entsprechende Bohrungen 27, 29 am Halter 17 und am Kammerabschnitt 13a eingeführt und in die Gewindebohrungen 23 eingeschraubt sind, wird die Elektrodenanordnung fest mit der Wandung des Kammerabschnitts 13a verbunden. Dabei wird jede Elektrode 15a durch die Haltekraft der jeweiligen Schraube 25 an den Halter 17 bzw. gegebenenfalls an ein zwischen dem Halter 17 und der Elektrode 15a angeordnetes Dichtelement angepresst. Die Schrauben 25 sind vorzugsweise aus Edelstahl gefertigt. Der Zwischenraum zwischen den Bohrungen 27, 29 wird z.B. mit einem Epoxidharz oder einem Silikon-Dichtstoff wasserdicht versiegelt. Alternativ kann die Abdichtung auch mittels einer Quetschverschraubung mit einem elastischen Dichtelement wie z.B. einem Gummiring erfolgen.

Elektrische Anschlussleitungen 31 für die Elektroden 15a werden z.B. mittels Kabelschuhen 33 elektrisch leitend mit den Schrauben 25 bzw. Gewindebolzen verbunden. Die Wandungen der Kammerabschnitte 13a sind im Bereich der Bohrungen 29 an der Aussenseite vorzugsweise abgeplattet. Eine elektrisch isolierenden Scheibe 35 bewirkt, dass die Kabelschuhe 33 nur mit den jeweiligen Schrauben 25, nicht jedoch mit der Wandung des Kammerabschnitts 13a in elektrischem Kontakt sind.

Der Halter 17 liegt dicht an der Innenseite der Wandung des Kammerabschnitts 13a an. Vorzugsweise umfasst die Wandung des Kammerabschnitts 13a an der Innenseite einen Absatz 37 (Figur 1). Insbesondere kann der Innendurchmesser des Kammerabschnitts 13a in einem zustromseitigen Abschnitt geringfügig, d.h. z.B. etwa 0.5 bis 1mm grösser sein, als im stromabwärts angrenzenden Abschnitt. Der Halter 17 mit den Elektroden 15a kann zustromseitig bis zum Absatz 37 in den Kammerabschnitt 13a eingeschoben werden. Der Absatz 37 dient als Anschlag für den Halter 17 und hält diesen in der gewünschten Position. Dies erleichtert die Befestigung des Halters 17 an der Wandung des Kammerabschnitts 13a.

Zusätzlich oder alternativ kann der Halter 17 mit einem Dichtmittel gegenüber der Wandung des Kammerabschnitts 13a abgedichtet sein. Insbesondere kann der Halter 17 an seiner Peripherie umlaufende Rippen umfassen, die als Labyrinthdichtung wirken (nicht dargestellt).

Die Elektroden 15a und der Halter 17 bilden zusammen im Inneren des Kammerabschnitts 13a eine Engstelle bzw. Verengung des Strömungskanals. Bei der beschriebenen Ausführungsform liegt der freie Strömungsquerschnitt in der Grössenordnung des etwa 0.5 bis etwa 1.5 - fachen des Strömungsquerschnitts des Einlassrohrs 7. Die mittlere Strömungsgeschwindigkeit des Wassers im Bereich der Elektroden 15a liegt in einer ähnlichen Grössenordnung wie beim Einlassrohr 7.

Bei alternativen Ausführungsformen der Vorrichtung kann die Strömungsgeschwindigkeit des Wassers im Bereich der Elektroden 15a vergrössert oder verkleinert werden, indem z.B. der Abstand L4 zwischen den Elektroden 15a verkleinert bzw. vergrössert wird. Bei einem z.B. um einen Faktor 10 kleineren Elektrodenabstand L4 wird die durchschnittliche Strömungsgeschwindigkeit des Wassers um diesen Faktor erhöht, wodurch eine Ablagerung von Partikeln an den Elektroden 15a zusätzlich erschwert wird. Ein kleinerer Elektrodenabstand L4 bewirkt bei gleichbleibender Elektrodenspannung auch eine Erhöhung des elektrischen Feldes zwischen den Elektroden 15a. Höhere elektrische Felder bewirken höhere Kräfte quer zur Hauptströmungsrichtung P1 auf geladene Ionen und Partikel zwischen den Elektroden 15a.

Bei weiteren alternativen Ausführungsformen kann jede Elektrolyseeinrichtung mehrere Elektrodenpaare umfassen. Die Form, Grösse, Anordnung und Befestigung von Elektroden 15a, 15b in einem Kammerabschnitt 13a, 13b können bei jeder Vorrichtung entsprechend der jeweiligen Anforderungen angepasst werden. Insbesondere können für 3/4-Zoll-Wasserleitungen angegebene Werte durch Skalieren für Wasserleitungen mit anderen Durchmessern angepasst werden.

Eine Spannungsquelle 39a ist über die Anschlussleitungen 31 mit den Elektroden 15a verbunden. Die Spannungsquelle 39a kann eine Spannung mit periodisch bzw. allgemein nach einem vorgegebenen Muster alternierender Polarität bereitstellen. Der Polaritätswechsel kann insbesondere mit einer Frequenz von 50Hz oder 60Hz eines Versorgungsnetzes erfolgen. Bei einfachen Ausführungsformen der Vorrichtung können die Elektroden 15a direkt mit der auf einen zulässigen Wert von beispielsweise 48VAC transformierten Netzspannung betrieben werden. Optional kann der Strom z.B. mittels eines seriell in den Stromkreis geschalteten ohmschen Widerstandes begrenzt werden, wobei dieser Widerstand vorzugsweise kontinuierlich oder stufenweise z.B. in einem Bereich von 1kOhm bis 10kOhm einstellbar ist.

Vorzugsweise kann der Elektrolysestrom in Abhängigkeit des Wasserstroms gesteuert oder geregelt werden. Bei einfachen Ausführungsformen der Vorrichtung kann für diesen Zweck ein Strömungswächter vorgesehen sein. Dieser umfasst einen Schalter, der nur dann geschlossen ist, wenn der Volumenstrom des Wassers einen vorgegebenen Minimalwert übersteigt. Der Schalter kann z.B. primärseitig oder sekundärseitig bei einem Transformator der Spannungsquelle 39a angeordnet sein.

Bei weiteren Ausführungsformen kann die Vorrichtung eine elektronische Steuerung 41 umfassen, die eine verfeinerte Steuerung oder Regelung der Elektrodenspannung U_{E} und/oder des Elektrolysestroms ermöglicht.

Dabei kann die Steuerung 41 z.B. eine Sensoranordnung 43 umfassen, die zusätzlich oder alternativ zum Strömungswächter einen oder mehrere Sensoren zum Erfassen einer oder mehrerer der folgenden Messgrössen aufweist:
- Strömungsgeschwindigkeit oder Durchflussrate des Wassers
- Wassertemperatur
- Wasserhärte, insbesondere Anteil an Ca- und/oder Mg-Ionen
- Verunreinigungsgrad. Dieser kann z.B. direkt sensorisch erfasst oder alternativ z.B. mittels eines Wahlschalters als einstellbarer Vorgabewert vorgegeben werden.
- Elektrodenstrom
- Elektrodenspannung

Die Steuerung 41 umfasst vorzugsweise einen Mikrocontroller, der die Messgrössen erfasst und nach vorgegebenen bzw. als Programm gespeicherten Vorschriften zu Steuergrössen für ein Stellglied bzw. einen Treiber verarbeitet, mit dem die Elektrodenspannung U_{E} und/oder der Elektrodenstrom beeinflusst werden. Als Stellglied kann insbesondere eine Anordnung mit einem oder mehreren Feldeffekttransistoren FET verwendet werden.

Die Steuerung 41 kann z.B. dazu ausgebildet sein, ein Spannungssignal U_{E}(t) mit periodisch alternierender Polarität bereitzustellen und dabei die Spitzenwerte Umax bzw. -Umax, und/oder den Tastgrad, also das Verhältnis von Impulsdauer T1 zur Periodendauer T in Abhängigkeit des Volumenstroms des Wassers zu steuern.

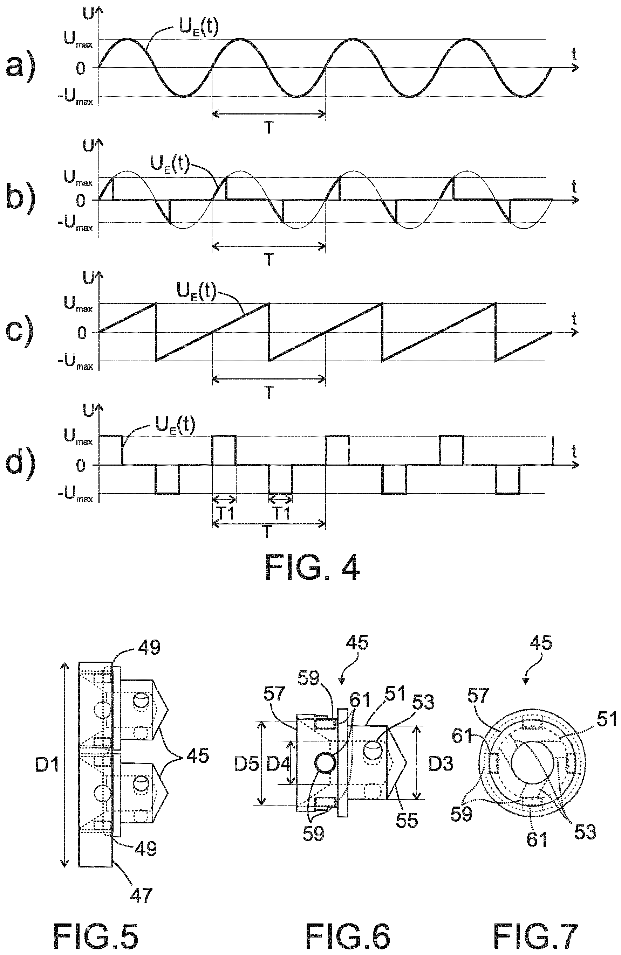

Figur 4 zeigt beispielhaft vier mögliche Funktionen für das Spannungssignal bzw. die Elektrodenspannung U_{E} in Abhängigkeit der Zeit t, nämlich a) eine Sinusfunktion, b) eine Sinusfunktion mit Phasenanschnitt, c) eine Sägezahnfunktion und d) ein Signal mit Rechteckpulsen.

Bei allen Funktionen können die Werte der positiven und negativen Spitzenspannungswerte Umax bzw. -Umax fest vorgegeben sein. Alternativ kann die Steuerung 41 die Spitzenspannungswerte Umax bzw. -Umax z.B. in Abhängigkeit der Leitfähigkeit des Wassers und/oder des jeweiligen Elektrodenabstandes L4 ändern bzw. anpassen.

Die Periode T bzw. die Frequenz f=1/T der Wechselspannung U(t) kann ebenfalls fest oder veränderbar von der Steuerung 41 z.B. in Abhängigkeit des Elektrodenabstandes L4 und/oder der Spitzenspannungswerte Umax bzw. -Umax vorgegeben werden.

Durch Überlagern eines Wechselspannungssignals mit einer Gleichspannung oder mit einer weiteren Wechselspannung, die eine vergleichsweise niedrige Frequenz von z.B. 0.01 Hz bis etwa 10 Hz aufweist, kann der Anteil geladener Teilchen, die vom Wasserstrom mitgerissen werden, bei Bedarf gesteuert, insbesondere erhöht werden.

Wie in Figur 1 dargestellt, kann die Vorrichtung einen oder mehrere weitere Kammerabschnitte 13b mit je einer weiteren Elektrolyseeinrichtung umfassen. Der Aufbau ist im Wesentlichen derselbe wie beim ersten Kammerabschnitt 13a, wobei die Elektroden 15b der Elektrolyseeinrichtung im weiteren Kammerabschnitt 13b in der Regel aus einem anderen Material gefertigt sind, beispielsweise aus Feinkupfer, wenn die Elektroden 15a im ersten Kammerabschnitt 13a aus Feinsilber gefertigt sind, oder umgekehrt.

Analog zu den Elektroden 15a im ersten Kammerabschnitt 13a kontrolliert die Steuerung 41 auch die vorzugsweise galvanisch getrennte Ansteuerung der Elektroden 15b im weiteren Kammerabschnitt 13b mittels eines weiteren Stellglieds. Die Parameter zum Ansteuern der weiteren Elektroden 15b können vorzugsweise unabhängig von jenen der ersten Elektrolyseeinrichtung individuell festgelegt werden. Dadurch kann die Menge des pro Zeiteinheit elektrochemisch an den Wasserstrom abgegebenen Elektrodenmaterials bei jedem Elektrodenpaar individuell gesteuert werden. Falls die Elektroden 15b der zweiten Elektrolyseeinrichtung mit einer Wechselspannung derselben Frequenz angesteuert werden wie die Elektroden 15a der ersten Elektrolyseeinrichtung, wird die gegenseitige Phasenlage dieser Wechselspannungssignale vorzugsweise um einen Vorgabewert von z.B. einer halben Wellenlänge versetzt vorgegeben.

Bei weiteren alternativen Ausführungsformen können eine oder mehrere Elektrolyseeinrichtungen mehr als zwei Elektroden und/oder Elektroden aus unterschiedlichen Materialien umfassen.

Zusätzlich zu der oder den Elektrolyseeinrichtungen ist in der Kammer 1 eine Verwirbelungseinrichtung angeordnet, die den Wasserstrom verwirbelt. Dabei bewirken Turbulenzen eine bessere Durchmischung und Verteilung der von den Elektroden 15a, 15b abgegebenen Partikel.

Bei der in Figur 1 dargestellten Ausführungsform der Vorrichtung ist die Verwirbelungsvorrichtung stromabwärts unmittelbar angrenzend an die Elektrolyseeinrichtungen angeordnet. Sie umfasst eine oder mehrere Düsen 45, die zumindest einen Teil des Wasserstroms quer zur Hauptströmungsrichtung P1 umlenken und/oder lokal beschleunigen. Bei Verwirbelungseinrichtungen mit mehreren Düsen 45 können diese parallel und/oder seriell angeordnet sein.

Figur 5 zeigt vergrössert die Verwirbelungseinrichtung aus Figur 1. Von insgesamt drei Düsen 45, die in Gewindebohrungen an einem Düsenträger 47 in Gestalt einer zylindrischen Scheibe eingeschraubt sind, sind zwei sichtbar. Jede der Düsen 45 ist mit einem O-Ring 49 als Dichtelement gegenüber dem Düsenträger 47 abgedichtet. Der Aussendurchmesser D1 des Düsenträgers 47 ist vorzugsweise so auf den zustromseitigen grösseren Innendurchmesser D2 des zweiten Adapters 11b abgestimmt, dass er durch Einpressen in die zustromseitige Öffnung des zweiten Adapters 11b mit diesem verbunden werden kann. Alternativ könnten die Teile z.B. auch Gewinde zum Verschrauben umfassen. Der Düsenträger 47, die Wandung der Kammer 1 sowie das Einlaufrohr 7 und das Auslaufrohr 9 können z.B. aus nicht magnetischem Automatenstahl 1.4404 bzw. V4A gefertigt sein.

Bei Vorrichtungen, die für den Einbau bei 3/4-Zoll-Wasserleitungen bestimmt sind, können D1 und D2 z.B. im Bereich von etwa 40mm bis etwa 60mm liegen und insbesondere etwa 53mm betragen, und die Düsen 45 haben vorzugsweise ein 1/2-Zoll-Aussengewinde zum Einschrauben in entsprechende Gewindebohrungen des Düsenträgers 47.

Bei 3/4-Zoll-Wasserleitungen, die in der Haustechnik verbreitet sind, sind die Volumenströme des Wassers typischerweise in der Grössenordnung von etwa 1 Liter pro Minute bis etwa 50 Liter pro Minute. Für andere Anwendungen, insbesondere für solche mit grösseren Volumenströmen bis zu etwa 150 Liter pro Minute oder bis zu 1000 Liter pro Minute, können Durchmesser von Rohren und Abmessungen der Vorrichtung entsprechend in geeigneter Weise skaliert werden.

Figur 6 zeigt eine einzelne Düse 45 aus Figur 5 in Seitenansicht, Figur 7 von der Seite des Auslassrohrs 9 her gesehen mit Blickrichtung entgegen der Hauptströmungsrichtung P1.

Die Düse 45 umfasst in einem zustromseitigen Abschnitt einen Zylindermantel 51, der einen Wirbelraum begrenzt. Das zustromseitige Ende des Zylindermantels 51 ist von einer Anströmkappe 55 verschlossen, die z.B. die Gestalt eines Kegelmantels hat. Der Zylindermantel 51 umfasst mindestens eine, vorzugsweise drei Einlassbohrungen 53, die quer zur Hauptströmungsrichtung P1 vorzugsweise tangential in den Wirbelraum münden. In einem einströmseitigen Abschnitt hat der Wirbelraum einen minimalen Innendurchmesser D4. In einem trichterartigen ausströmseitigen Abschnitt erweitert sich der freie Strömungsquerschnitt zu einer Austrittsöffnung 57 hin bis zu einem maximalen Innendurchmesser D5. Bei der Düse 45 wird der Wasserstrom aufgeteilt in Teilströme, die durch die Einlassbohrungen 53 umgelenkt und beschleunigt aus verschiedenen Richtungen tangential in den Wirbelraum eingeleitet werden. Im Wirbelraum werden die Teilströme wieder zusammengeführt. Wie in Figur 7 dargestellt, können die Einlassbohrungen 53 mit gleichem Drehsinn in den Wirbelraum münden. Dadurch wird die mittlere Rotationskomponente des bei der Austrittsöffnung 57 aus der Düse 45 austretenden Wasserstroms maximal.

Im ausströmseitigen Abschnitt umfasst die Wandung der Düse 45 mindestens eine, vorzugsweise vier gleichmässig verteilt an der Aussenseite angeordnete sacklochartige Ausnehmungen 59. In jeder dieser Ausnehmungen 59 ist ein Permanentmagnet 61 angeordnet, beispielsweise ein zylindrischer Neodymmagnet, der beispielsweise einen Durchmesser von etwa 4mm und eine Dicke von etwa 2mm aufweist. Die Remanenz eines solchen Magneten 61 kann z.B. in der Grössenordnung von 0.8 T bis 1.5 T liegen.

Die Düsen 45 sind vorzugsweise aus einer eisenhaltigen Legierung gefertigt, beispielsweise aus Alubronze wie z.B. CuAl10Ni5Fe4. Dies bewirkt, dass die Magnete 61 durch magnetische Anziehungskraft in den Ausnehmungen 59 gehalten werden. Dadurch wird das Einfügen der Magnete 61 in die Ausnehmungen 59 erleichtert. Die Magnete 61 werden alle gleichpolig an der Düse 45 befestigt, d.h. entweder sind alle Südpole oder alle Nordpole der Magnete 61 bezüglich der Düsenachse radial nach innen oder radial aussen ausgerichtet.

Nachfolgend sind Wertebereiche und Werte für Abmessungen angegeben, die bei einer Vorrichtung, die für den Einbau bei 3/4-Zoll-Wasserleitungen bestimmt ist, geeignet sind. Aussendurchmesser D3 des Zylindermantels 51: Etwa 12mm bis etwa 18mm; Wandstärke des Zylindermantels: etwa 2.5mm bis etwa 3,5mm bzw. Innendurchmesser D4 des Zylindermantels 51: Etwa 5mm bis etwa 13mm; Durchmesser der Einlassbohrungen 53: Etwa 2mm bis etwa 5mm, insbesondere 3mm bis 3,5mm, z.B. 3,3mm; Der maximale Aussendurchmesser D5 der Austrittsöffnung 57 ist z.B. etwa 1mm bis etwa 3mm kleiner als der Aussendurchmesser der Düse 45 bei der Austrittsöffnung 57. Die Magnete 61 sind vorzugsweise zylindrisch mit einer Höhe von etwa 2mm und einem Durchmesser von etwa 4mm.

Solche Verwirbelungseinrichtungen können insbesondere in Kombination mit einer oder zwei Elektrolyseeinrichtungen verwendet werden, deren Elektroden 15a, 15b mit einer Wechselspannung angesteuert werden, deren Effektivwert kleiner als 48V ist, und deren Frequenz z.B. im Bereich von 10Hz bis 10kHz liegt.

Für weitere Anwendungen wie z.B. die Aufbereitung von salzhaltigem oder in sonstiger Weise belastetem Wasser zu Nutzwasser für Pflanzen kann die Vorrichtung z.B. durch Ändern von geometrischen Abmessungen, Formen, Materialien und/oder elektrischen und/oder magnetischen Kenngrössen in geeigneter Weise angepasst werden.

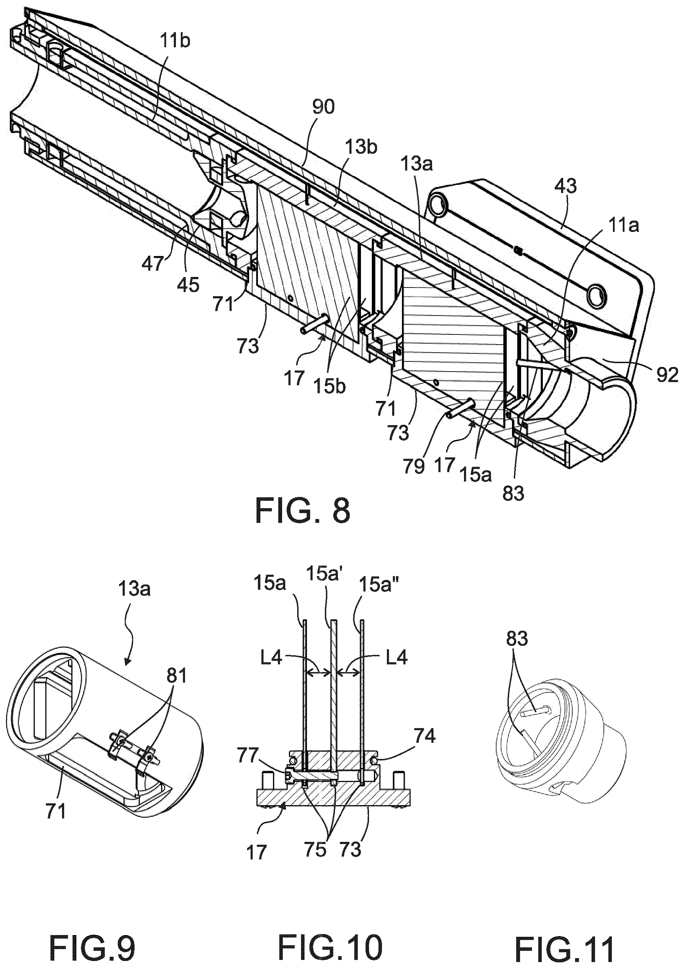

Bei Bedarf kann die Vorrichtung z.B. zusätzlich durch einen oder mehrere vor- oder nachgelagerte Filter ergänzt werden. Optional können an der Kammer 1, z.B. aussen am Auslassrohr 9, weitere Permanentmagnete 61 angeordnet sein. Vorzugsweise ist die Kammer 1 von einem Schutzgehäuse ummantelt, aus dem nur die Enden des Einlassrohrs 7 und des Auslassrohrs 9 hervorragen (nicht dargestellt). Das Schutzgehäuse ist elektrisch leitend und kann z.B. elektrisch mit dem Erdpotential verbunden werden. Das Schutzgehäuse kann z.B. mehrere, insbesondere fünf Seitenwände umfassen, von denen keine parallel zu einer anderen angeordnet ist. Vorzugsweise sind diese Seitenwände zusammenhängend als Strangprofil aus Aluminium gefertigt. Die elektronische Steuerung 41 kann z.B. teilweise oder vollständig in oder an diesem Gehäuse angeordnet sein. Vorzugsweise sind an der Aussenseite dieses Gehäuses ein oder mehrere Bedienelemente wie z.B. eine Folientastatur mit einer oder mehreren Bedientasten und optional eine Anzeigevorrichtung angeordnet. Zumindest eines der Bedienelemente ermöglicht das Ein- und Ausschalten und/oder das Wählen einer von mehreren möglichen vorgegebenen Betriebsarten, die sich z.B. durch unterschiedliche maximale Elektrodenströme unterscheiden. Figur 8 zeigt in perspektivischer Darstellung einen Längsschnitt einer weiteren Vorrichtung. Sie unterscheidet sich von jener in Figur 1 insbesondere dadurch, dass die Wandung jedes der Kammerabschnitte 13a, 13b eine Einschuböffnung 71 aufweist, dass jeder Halter 17 eine Deckplatte 73 und ein Dichtelement 74 umfasst, mit denen die jeweilige Einschuböffnung 71 dicht verschliessbar ist, und dass an jedem Halter 17 drei plattenförmige Elektroden 15a bzw. 15b parallel zueinander hervorragen. Figur 9 zeigt den Kammerabschnitt 13a, Figur 10 einen Querschnitt des Halters 17 mit den drei Elektroden 15a, 15a', 15a". Die Stärke der mittleren Elektrode 15a' liegt vorzugsweise in der Grössenordnung von etwa 1mm bis etwa 6mm und kann insbesondere etwa 2mm oder etwa 4mm betragen. Sie ist vorzugsweise etwa doppelt so gross wie jene der äusseren Elektroden 15a, 15a". Die Abstände L4 zwischen je zwei benachbarten Elektroden 15a, 15a' bzw. 15a', 15a" sind im Wesentlichen gleich gross. Die Elektroden 15a, 15a', 15a" sind kraftschlüssig und/oder formschlüssig in Aufnahmenuten 75 am Halter 17 befestigt. Eine erste Kontaktschraube 77 ist durch eine seitliche Bohrung des Halters 17 und durch eine entsprechende Bohrung der äusseren Elektrode 15a elektrisch leitend mit der mittleren Elektrode 15a' verbunden. In analoger Weise ist eine zweite Kontaktschraube 79 durch eine weitere seitliche Bohrung des Halters 17 und durch eine entsprechende Bohrung der mittleren Elektrode 15a' elektrisch leitend mit den beiden äusseren Elektroden 15a, 15a" verbunden. Wenn der Halter 17 z.B. durch Verschrauben oder eine andere geeignete Befestigungstechnik mit dem ersten Kammerabschnitt 13a verbunden ist, sind die Kontaktschrauben 77, 79 elektrisch leitend mit Kontaktzungen 81 an der Aussenseite der Wandung des Kammerabschnitts 13a verbunden. Diese Kontaktzungen können über Verbindungsleitungen mit der Steuerung 43 verbunden werden. Die Wandung jedes Kammerabschnitts 13a, 13b ist vorzugsweise aus einem elektrisch isolierenden Kunststoff, z.B. aus POM-C gefertigt. Dies gilt auch für weitere Teile, insbesondere die Adapter 11a, 11b und die Träger 17.

Wie aus Figur 11 ersichtlich, umfasst der zustromseitige Adapter 11a zwei von aussen her in den Strömungsraum hineinragende, gegenüber der Wandung des Adapters 11a abgedichtete und gegebenenfalls elektrisch isolierte Schrauben oder Stifte 83. Diese sind als Sensorelemente oder als Träger von Sensorelementen ausgebildet, mit denen die Steuerung Messgrössen wie z.B. die Strömungsgeschwindigkeit und/oder die Leitfähigkeit von in die Kammer 1 einströmendem Wasser erfassen kann.

Bei der in Figur 8 dargestellten Ausführungsform der Vorrichtung sind die Verbindungen der Kammerabschnitte 13a, 13b und der Adapter 11a, 11b vorzugsweise als Steckverbindungen mit geeigneten Dichtelementen ausgebildet. Die zusammengesteckten Teile sind innerhalb eines vorzugsweise mehrkantigen Profilgehäuses 90 angeordnet und durch Abschlussplatten 91 mit Öffnungen 93 an diesem Profilgehäuse 90 gesichert.

## Patentansprüche

1. Vorrichtung zum Behandeln eines Wasserstroms, umfassend eine von einer Wandung begrenzte Kammer (1) mit einer Einlassöffnung (3) und einer Auslassöffnung (5), die eine Hauptströmungsrichtung (P1) für an der Einlassöffnung (3) einströmendes und an der Auslassöffnung (5) ausströmendes Wasser definieren, und mindestens eine Elektrolyseeinrichtung mit zwei Elektroden (15a, 15b), die beabstandet zueinander in der Kammer (1) angeordnet sind, **dadurch gekennzeichnet, dass** in der Kammer (1) zwischen der Einlassöffnung (3) und der Auslassöffnung (5) zusätzlich eine Verwirbelungseinrichtung mit mindestens einer Düse (45) zum Verwirbeln des Wasserstroms in der Kammer (1) angeordnet ist, wobei jede Düse (45) anströmseitig einen Zylindermantel (51) umfasst, der einen Wirbelraum begrenzt, dass der Zylindermantel (51) anströmseitig durch eine Anströmkappe (55) verschlossen ist und ausströmseitig eine Austrittsöffnung (57) hat, und dass der Zylindermantel (51) mindestens eine durchgehende Einlassbohrung (53) aufweist.

2. Vorrichtung nach Anspruch 1, **dadurch gekennzeichnet, dass** die Verwirbelungseinrichtung stromabwärts zwischen den Elektroden (15a, 15b) und der Auslassöffnung (5) angeordnet ist.

3. Vorrichtung nach einem der Ansprüche 1 bis 2, **dadurch gekennzeichnet, dass** mehrere Düsen (45) an einem Düsenträger (47) angeordnet sind, und dass der Düsenträger (47) so in die Kammer (1) eingebaut ist, dass der Wasserstrom in Teilströme aufgeteilt wird, die durch die Einlassbohrungen (53) in die Wirbelkammern einströmen, und nach dem Austreten durch die Austrittsöffnungen (57) wieder vereinigt werden.

4. Vorrichtung nach einem der Ansprüche 1 bis 3, **dadurch gekennzeichnet, dass** eine Magnetanordnung mindestens einen Magneten (61) umfasst, der an der mindestens einen Düse (45) oder an der Aussenseite eines Auslassrohrs (9) angeordnet ist, dessen Ende die Auslassöffnung (5) definiert.

5. Vorrichtung nach Anspruch 4, **dadurch gekennzeichnet, dass** an einem ausströmseitigen Abschnitt jeder Düse (45) mehrere Magnete (61) peripher zur Wirbelkammer angeordnet sind.

6. Vorrichtung nach einem der Ansprüche 1 bis 5, **dadurch gekennzeichnet, dass** jede Elektrolyseeinrichtung einen Halter (17) umfasst, der dicht an der Innenseite der Wandung eines zugehörigen Kammerabschnitts (13a, 13b) der Kammer (1) anliegt und mit dieser Wandung verbunden ist, oder der ein Dichtelement (74) zum Abdichten einer Einschuböffnung (71) dieser Wandung umfasst, und dass der Halter (17) die zugehörigen Elektroden (15a, 15b) in einem gegenseitigen Abstand (L4) zueinander hält, derart, dass der Halter (17) und die Elektroden (15a, 15b) im Inneren des Kammerabschnitts (13a, 13b) eine Begrenzung des Strömungskanals bilden.

7. Vorrichtung nach Anspruch 6, **dadurch gekennzeichnet, dass** in einem ersten Kammerabschnitt (13a) Elektroden (15a) einer ersten Elektrolyseeinrichtung aus Feinsilber angeordnet sind und in einem weiteren Kammerabschnitt (13b) Elektroden (15b) einer weiteren Elektrolyseeinrichtung aus Feinkupfer oder umgekehrt, oder dass im ersten Kammerabschnitt (13a) mindestens zwei Elektroden (15a) aus unterschiedlichen Materialien angeordnet sind.

8. Vorrichtung nach einem der Ansprüche 1 bis 7, **dadurch gekennzeichnet, dass** die Elektroden (15a, 15b) jeder Elektrolyseeinrichtung elektrisch mit einer zugehörigen Spannungsquelle (39a, 39b) verbunden sind, wobei jede dieser Spannungsquellen (39a, 39b) dazu ausgebildet ist, eine Spannung mit nach einem vorgegebenen Muster alternierender Polarität bereitzustellen.

9. Verfahren zum Behandeln eines Wasserstroms mit einer Vorrichtung gemäss Anspruch 1, wobei der Wasserstrom durch die Kammer (1) geleitet wird, **dadurch gekennzeichnet, dass** den Elektroden (15a, 15b) der Elektrolyseeinrichtung eine Spannung mit alternierender Polarität zugeführt wird, dass aufgrund dieser Spannung Partikel des Elektrodenmaterials an den Wasserstrom abgegeben werden, und dass der Wasserstrom durch die Einlassbohrung (53) im Zylindermantel (51) der mindestens einen Düse (45) quer zur Hauptströmungsrichtung (P1) in den Wirbelraum geleitet wird, in dem die Partikel durchmischt werden.

## Claims

1. Apparatus for treating a water stream, comprising a chamber (1) bounded by a wall and having an inlet opening (3) and an outlet opening (5) which define a main flow direction (P1) for water flowing in at the inlet opening (3) and flowing out at the outlet opening (5), and at least one electrolysis device having two electrodes (15a, 15b) which are arranged in the chamber (1) spaced apart from one another, **characterized in that** a vortexing device with at least one nozzle (45) for vortexing the water flow in the chamber (1) is additionally arranged in the chamber (1) between the inlet opening (3) and the outlet opening (5), each nozzle (45) comprising a cylinder shell (51) on the inflow side which bounds a vortex space, **in that** the cylinder shell (51) is closed on the inflow side by an inflow cap (55) and has an exit opening (57) on the outflow side, and **in that** the cylinder shell (51) has at least one continuous inlet hole (53).

2. Apparatus according to claim 1, **characterized in that** the vortexing device is arranged downstream between the electrodes (15a, 15b) and the outlet opening (5).

3. Apparatus according to one of claims 1 to 2, **characterized in that** a plurality of nozzles (45) are arranged on a nozzle carrier (47), and **in that** the nozzle carrier (47) is installed in the chamber (1) in such a way that the water flow is divided into partial flows which flow into the vortexing chambers through the inlet holes (53) and are combined again after exiting through the exit openings (57).

4. Apparatus according to any one of claims 1 to 3, **characterized in that** a magnet arrangement comprises at least one magnet (61) which is arranged on the at least one nozzle (45) or on the outside of an outlet tube (9), the end of which defines the outlet opening (5).

5. Apparatus according to claim 4, **characterized in that** multiple magnets (61) are arranged peripherally to the vortexing chamber in an outflow section of each nozzle (45).

6. Apparatus according to one of claims 1 to 5, **characterized in that** each electrolysis device comprises a holder (17) which lies tightly against the inside of the wall of an associated chamber section (13a, 13b) of the chamber (1) and is connected to this wall, or which comprises a sealing element (74) for sealing an insertion opening (71) of this wall, and **in that** the holder (17) holds the associated electrodes (15a, 15b) at a mutual distance (L4) from one another, such that the holder (17) and the electrodes (15a, 15b) inside the chamber section (13a, 13b) form a boundary of the flow channel.

7. Apparatus according to claim 6, **characterized in that** electrodes (15a) of a first electrolysis device made of fine silver are arranged in a first chamber section (13a) and electrodes of a further electrolysis device made of fine copper are arranged in a further chamber section (13b) or vice versa, or **in that** at least two electrodes (15a) made of different materials are arranged in the first chamber section (13a).

8. Apparatus according to any one of claims 1 to 7, **characterized in that** the electrodes (15a, 15b) of each electrolysis device are electrically connected to an associated voltage source (39a, 39b), each of said voltage sources (39a, 39b) being adapted to provide a voltage with alternating polarity according to a predetermined pattern.

9. Method for treating a water stream with an apparatus according to claim 1, wherein the water stream is passed through the chamber (1), **characterized in that** a voltage with alternating polarity is supplied to the electrodes (15a, 15b) of the electrolysis device, that due to this voltage particles of the electrode material are released to the water stream, and that the water stream is passed through the inlet bore (53) in the cylinder shell (51) of the at least one nozzle (45) transversely to the main flow direction (P1) into the vortex space in which the particles are mixed.

## Revendications

1. Dispositif pour le traitement d'un courant d'eau, comprenant une chambre (1) délimitée par une paroi avec une ouverture d'entrée (3) et une ouverture de sortie (5), qui définissent une direction d'écoulement principale (P1) pour l'eau entrant à l'ouverture d'entrée (3) et sortant à l'ouverture de sortie (5), et au moins un dispositif d'électrolyse avec deux électrodes (15a, 15b), qui sont disposées à distance l'une de l'autre dans la chambre (1), **caractérisé, en ce que** dans la chambre (1), entre l'ouverture d'entrée (3) et l'ouverture de sortie (5), est disposé en plus un dispositif de tourbillonnement avec au moins une buse (45) pour faire tourbillonner le courant d'eau dans la chambre (1), chaque buse (45) comprenant du côté de l'alimentation une enveloppe cylindrique (51), qui délimite une chambre de tourbillonnement, **en ce que** l'enveloppe cylindrique (51) est fermée du côté de l'alimentation par un capuchon d'afflux (55) et possède une orifice de sortie (57) du côté sortie, et **en ce que** l'enveloppe cylindrique (51) présente au moins un alésage d'entrée (53) traversant.

2. Dispositif selon la revendication 1, **caractérisé en ce que** le dispositif de tourbillonnement est disposé en aval entre les électrodes (15a, 15b) et l'ouverture de sortie (5).

3. Dispositif selon l'une des revendications 1 à 2, **caractérisé en ce que** plusieurs buses (45) sont disposées sur un support de buses (47), et **en ce que** le support de buses (47) est monté dans la chambre (1) de telle sorte que le flux d'eau est divisé en flux partiels qui entrent dans les chambres de tourbillonnement par les alésages d'entrée (53) et sont à nouveau réunis après leur sortie par les orifices de sortie (57).

4. Dispositif selon l'une des revendications 1 à 3, **caractérisé en ce qu'**un ensemble d'aimants comprend au moins un aimant (61) disposé sur ladite au moins une buse (45) ou sur l'extérieur d'un tube de sortie (9) dont l'extrémité définit l'orifice de sortie (5).

5. Dispositif selon la revendication 4, **caractérisé en ce que** plusieurs aimants (61) sont disposés à la périphérie de la chambre de tourbillonnement sur une partie de chaque buse (45) située du côté sortie.

6. Dispositif selon l'une des revendications 1 à 5, **caractérisé en ce que** chaque dispositif d'électrolyse comprend un support (17) qui est en appui étanche contre la face intérieure de la paroi d'une portion de chambre (13a, 13b) associée de la chambre (1) et qui est relié à cette paroi, ou qui comprend un élément d'étanchéité (74) pour rendre étanche une ouverture d'insertion (71) de cette paroi, et **en ce que** le support (17) maintient les électrodes associées (15a, 15b) à une distance mutuelle (L4) l'une de l'autre, de telle sorte que le support (17) et les électrodes (15a, 15b) forment une limite du canal d'écoulement à l'intérieur de la section de chambre (13a, 13b).

7. Dispositif selon la revendication 6, **caractérisé en ce que** des électrodes (15a) d'un premier dispositif d'électrolyse en argent fin sont disposées dans une première section de chambre (13a) et des électrodes (15b) d'un autre dispositif d'électrolyse en cuivre fin sont disposées dans une autre section de chambre (13b) ou inversement, ou **en ce qu'**au moins deux électrodes (15a) de matériaux différents sont disposées dans la première section de chambre (13a).

8. Dispositif selon l'une quelconque des revendications 1 à 7, **caractérisé en ce que** les électrodes (15a, 15b) de chaque dispositif d'électrolyse sont reliées électriquement à une source de tension (39a, 39b) associée, chacune de ces sources de tension (39a, 39b) étant adaptée pour fournir une tension dont la polarité alterne selon un modèle prédéterminé.

9. Procédé de traitement d'un flux d'eau avec un dispositif selon la revendication 1, dans lequel le flux d'eau est guidé à travers la chambre (1), **caractérisé en ce qu'**une tension de polarité alternée est appliquée aux électrodes (15a, 15b) du dispositif d'électrolyse, **en ce que**, en raison de cette tension, des particules du matériau des électrodes sont délivrées au courant d'eau, et **en ce que** le courant d'eau est guidé à travers l'alésage d'entrée (53) dans l'enveloppe cylindrique (51) de la au moins une buse (45) transversalement à la direction d'écoulement principale (P1) dans l'espace de tourbillonnement, dans lequel les particules sont mélangées.
